# EUROPEAN PATENT SPECIFICATION

(11) **EP 2 210 542 B1**
(45) Date of publication and mention of the grant of the patent: **19.12.2012**
(21) Application number: 09380200.7
(22) Date of filing: 30.12.2009
(51) Int. Cl.: A47J 43/046, A47J 27/04

(54) **Device for cooking, heating and/or defrosting food while also blending it**
Vorrichtung zum Garen, Aufwärmen und/oder Auftauen während des gleichzeitigen Mischens
Dispositif de cuisson, chauffage et/ou décongélation d'aliments tout en les mélangeant

(30) Priority: 21.01.2009 ES 200900090 U; 21.10.2009 ES 200930550 U
(43) Date of publication of application: 28.07.2010
(73) Proprietor: JANE, S.A., 08184 Palau Solità i Plegamans Barcelona (ES)
(72) Inventor: Jane Santamaria, Manuel, 08184 Palau Solità i Plegamans (Barcelona) (ES)
(74) Representative: Morgades y Manonelles, Juan Antonio

(56) References cited:
- FR-A1- 2 915 073
- GB-A- 2 387 768
- US-A- 6 076 452
- US-A1- 2002 141 286

## Description

### OBJECT OF THE INVENTION

Device for cooking, heating and/or defrosting food while also blending it.

### FIELD OF THE INVENTION

This appliance can be used for cooking, heating and/or defrosting food with the special feature that the food can also be blended for homogenisation and is mainly used for feeding children.

### BACKGROUND OF THE INVENTION

This type of appliance has been around for some time and it comprises a steam generator from which the steam is moved to the cooking container with a cover where the food is placed in basket with a perforated bottom, the steam moves into it and then exits the device. To avoid the food getting compacted and to cook evenly, the bottom of the cooking container has a rotating blade to blend the food.

As an example of this sort of devices, the following patents are cited, US-A-6076452, GB-A-2387768 and FR-A-2915073.

US-A-6076452 relates to a device for heating and/or cooking food, where the steam goes into the cooking container through apertures in the top and goes out through an aperture of said container and the basket shows apertures in the proximity of its base.

GB-A-2387768 is a homogenized blender where the steam penetrates into the cooking recipient through an opening in the top and goes out though another opening in the top in front of an aperture in the closure element of the cooking recipient, which comprises an internal step on which a flanged edge of the basket rests.

FR-A-2915073 comprises a device for steam cooking, where the steam penetrates through a lateral aperture of the cover, it is led through a channel provided in the lateral of the basket to penetrate later on in it through the orifices of its base and goes out through an upper orifice of the cover.

### SUMMARY OF THE INVENTION

This invention is an appliance for cooking and/or heating food while blending it, thus diversifying operations, adapting the output of the steam generator, the speed of the blades, and the duration of the task according to needs and according to the type of food to be prepared, all of this is achieved with great ease, in a user-friendly device.

This appliance is characterised by the fact that the cooking enclosure has an orifice in its side to receive the steam, which moves down through the basket and when it has gone through the holes at the bottom, it rises through the basket to exit through an angular recess at the edge of the cover.

This appliance, in addition to a start and stop switch, has controls for the different operations indicated above, also having a control for provisional stopping during operation, as well as a screen displaying information on the chosen operation.

The basket and the cooking enclosure are designed in such a fashion that they fit together easily and effectively, and the basket is easily removed from the cooking enclosure.

These and other characteristics will be best made apparent by the following detailed description whose understanding will be made easier by the accompanying three sheets of drawings showing two appliances being cited only by way of an example not limiting the scope of the present invention.

### SUMMARY OF THE INVENTION

In the drawings:

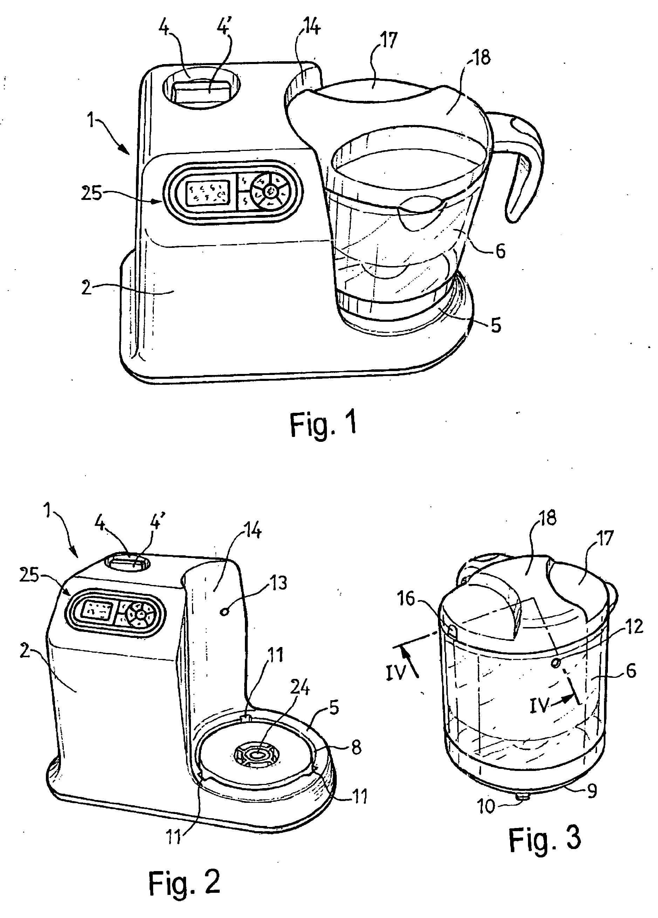

Fig. 1 is an illustration of an appliance,
Figs. 2 and 3 show the body-base of the appliance and the cooking container, respectively,
Fig. 4 is an enlarged cross section of the cooking container with its basket, through IV-IV of Fig. 3,
Fig. 5 is a detail of the controls and the display screen.
Figs. 6 and 7 show the body-base of the appliance and the cooking container, respectively, according to the invention,
Figs. 8 and 9 are details of the cover and the basket displayed in Fig. 7, and
Fig. 10 is an enlarged cross section of the cooking container with its basket, through X-X of Fig. 7,

### DETAILED DESCRIPTION

As displayed in the drawings, an appliance for cooking, heating and/or defrosting food, while at the same time blending, has a body-base (1) of which one half is the housing (2) for the steam generator, formed by a plastic water tank with a metal bottom that is heated, for example, by an electrical resistance, and an electric motor that moves the blades of the blender (3), the housing (2) has an opening at the top (4) with a cap (4'), for loading water in the tank.

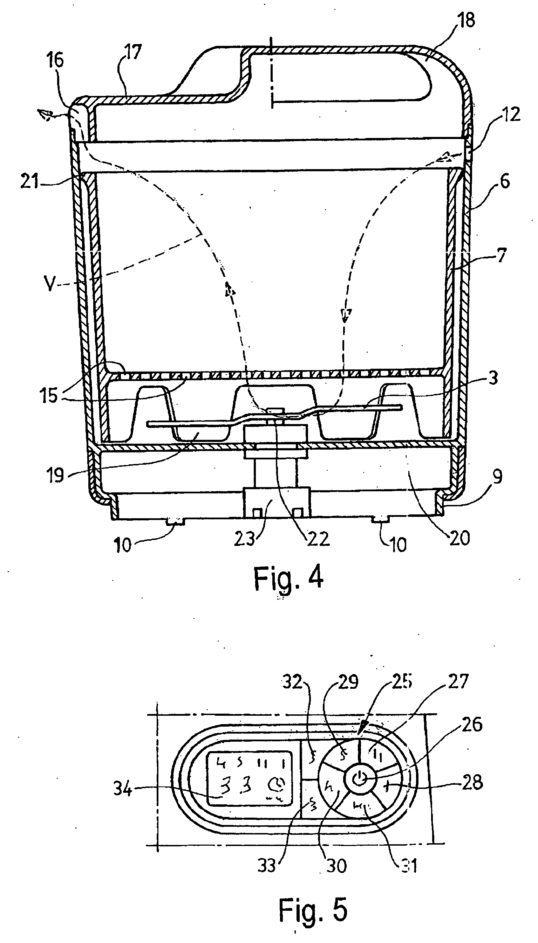

The other half of the body-base (1) forms a platform (5) on which the cooking container is fitted (6) which inside holds a basket (7) (Fig. 4) where the food is placed. This platform has a circular groove (8) which the edge rim (9) of the bottom of the cooking container fits onto, centred by means of the tabs (10) that fit into recesses (11) in a groove (8).

The cooking container (6) has a side orifice (12) that receives the steam from an outlet (13) on the wall (14) of the housing (2) which it lines up with the cooking container.

Steam (V) (Fig. 4) descends through the basket (7) going through the holes (15) at the bottom and then ascends through the basket to exit through an angular outlet (16) at the edge of the cover (17) which seals the cooking enclosure and has a Handle (18) formed by a perimetral projection.

The basket (7) is supported on it periphery by legs (19) at the bottom (20) of the cooking enclosure and has a rim on its edge (21) to fit into the wall of the cooking enclosure (6) minimizing steam leakage between the walls of the basket and the cooking enclosure.

The blade (3) for blending food is placed between the bottom of the cooking enclosure and the bottom of the basket and has a shaft (22) that couples (23) with a rotating support (24) fitted to the platform (5), which is moved by an electric motor.

On the housing (2) of the base-body there is a control panel (25) with a start/stop switch (26) (Fig. 5) around which are controls (27 and 28) to respectively increase or decrease the rotation speed of the blender blade (3), controls (29 and 30) for more or less steam generation, respectively, and a control (31) for stopping provisionally when in operation.

In addition, there are controls (32 and 33) to increase or decrease respectively the time of operation, mainly for cooking times.

The chosen program is displayed on a screen (34).

When in operation, all the controls and the screen are illuminated.

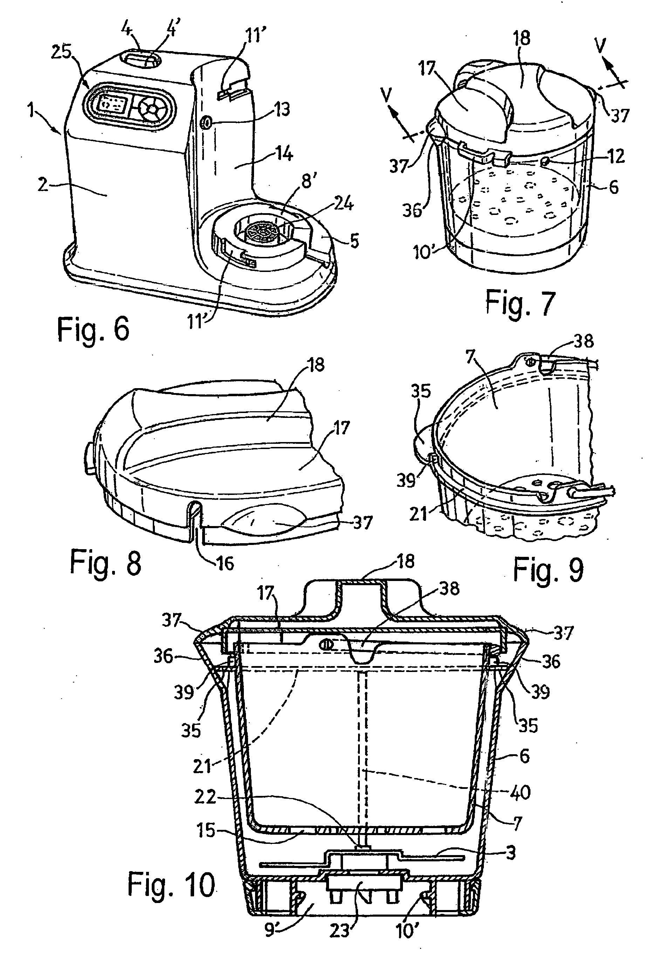

In the appliance according to the invention, as displayed in Figs. 6 and 7, the platform has a ring-shaped projection (8') into which a circular hole on the bottom of the cooking enclosure fits (9'), which is centred and secured when the lugs (10') fit into the cover and of the container into grooves (11') made in the body-base (1).

The basket (7) has two diametrically opposed tabs (35) that fit into their respective conical shaped recesses (36) in the mouth of the container (6), and the cover (17) has its corresponding lugs (37) that coincide with the aforementioned housings (Fig. 10).

The tabs (35) are on the peripheral rim (21) and secure the basket (7) to the wall of the container (6) minimising steam leakage between the walls of one and the other.

With the aim of stabilising the basket fitting (7) in the cooking container (7) there are two diametrically opposed ribs (40) on the inside of the cooking container on which the basket rests by means of its peripheral rim (21)

To facilitate removal of the basket (7) from the container (6) it has a folding handle (38), which when not in use is folded onto diametrically opposed supports (39) on the periphery of the basket (7).

This appliance has visual and acoustic warnings for end of cycle and the lack of water during operation.

The invention can within its essentiality be put into practice in other embodiments only in detail differing from the indicated one having been described above only by way of example, said other embodiments also falling within the scope of the protection being sought. Thus, this appliance for cooking, heating and/or defrosting food while blending it, can be manufactured in any or size, with the most suitable resources and materials and with the required accessories, and the components can be replaced by others technically equivalent, as they are within the scope of the claims.

## Claims

1. Device for cooking, heating and/or defrosting food while also blending it, comprising a steam generator, a cooking and blending container (6) that receives the steam and contains a basket (7) to contain food with holes (15) in its bottom, the container is sealed with a cover (17), and has a rotating blade (3) at the bottom to blend the food, whereby the cooking container (6) has an orifice (12) at one side by which steam enters and moves down the basket (7) and when it has gone through the holes (15) at the bottom, it rises through the basket (7) to be expelled through an angular recess (16) on the edge of the cover (17), and because the basket (7) has two diametrically opposed tabs (35) that fit into respective recesses (36) on the rim of the cooking container (6) the cover (17) has corresponding lugs (37) that coincide with said recesses (36).

2. Device for cooking, heating and/or defrosting food while also blending it, in accordance with claim 1, **characterised by** the fact that the basket (7) has an articulated handle (38).

3. Device for cooking, heating and/or defrosting food while also blending it, in accordance with claim 1, **characterised by** the fact that it has independent controls (27-28) for different blending blade (3) speeds, (29-30) different steam generator power, and (32-33) for different operation times, and one control (31) for provisional stoppage, all displayed on a screen (34).

4. Device for cooking, heating and/or defrosting food while also blending it, in accordance with claim 3, **characterised by** the fact that all the controls (27-28-29-30-31-32 and 33) and the screen (34) are illuminated when in operation.

5. Device for cooking, heating and/or defrosting food while also blending it, in accordance with claim 1, **characterised by** the fact that it has visual and acoustic end of cycle and lack of water warnings when in operation.

## Patentansprüche

1. Vorrichtung zum Kochen, Erhitzen und/oder Auftauen von Speisen bei gleichzeitigem Mischen derselben, bestehend aus einem Dampferzeuger, einem Koch- und Mischbehälter (6), der den Dampf empfängt, einen mit Löchern (15) im Boden versehenen Korb (7) zur Aufnahme der Speisen enthält, mit einem Deckel (17) abgedichtet ist und am Boden eine rotierende Rührschaufel (3) zum Mischen der Speisen aufweist, wobei der Kochbehälter (6) an einer Seite eine Öffnung (12) besitzt, durch die der Dampf eindringt, im Korb (7) nach unten strömt, durch die Löcher (15) am Boden hindurchtritt und durch den Korb (7) nach oben steigt, um durch eine winkelförmige Aussparung (16) an der Kante des Deckels (17) wieder ausgestoßen zu werden, wobei der Korb (7) zwei diametral entgegengesetzte Laschen (35) aufweist, die in die jeweiligen Aussparungen (36) am Rand des Kochbehälters (6) passen, und der Deckel (17) mit entsprechenden Nasen (37) versehen ist, die mit den Aussparungen (36) übereinstimmen.

2. Vorrichtung zum Kochen, Erhitzen und/oder Auftauen von Speisen bei gleichzeitigem Mischen derselben, nach Anspruch 1, **dadurch gekennzeichnet, dass** der Korb (7) einen beweglichen Griff (38) aufweist.

3. Vorrichtung zum Kochen, Erhitzen und/oder Auftauen von Speisen bei gleichzeitigem Mischen derselben, nach Anspruch 1, **dadurch gekennzeichnet, dass** sie unabhängige Bedienelemente (27-28) für unterschiedliche Geschwindigkeiten der Rührschaufel (3), (29-30) unterschiedliche Leistungsstufen des Dampferzeugers und (32-33) für unterschiedliche Betriebszeiten sowie ein Bedienelement (31) für das vorübergehende Anhalten der Vorrichtung aufweist, die alle auf einem Bildschirm (34) angezeigt werden.

4. Vorrichtung zum kochen, erhitzen und/oder auftauen von speisen bei gleichzeitigem mischen derselben, nach anspruch 3, **dadurch gekennzeichnet, dass** alle Bedienelemente (27-28-29-30-31-32 und 33) und der Bildschirm (34) während des Betriebs erleuchtet sind.

5. Vorrichtung zum Kochen, Erhitzen und/oder Auftauen von Speisen bei gleichzeitigem Mischen derselben, nach Anspruch 1, **dadurch gekennzeichnet, dass** sie während des Betriebs optische und akustische Warnsignale bei Ablauf der Zykluszeit und Wassermangel erzeugt.

## Revendications

1. Dispositif pour cuisiner, chauffer et/ou décongeler des aliments, ainsi que pour les mélanger, comprenant un générateur de vapeur, un conteneur de cuisson et de mélange (6) qui reçoit la vapeur et contient un panier (7) pour placer les aliments avec des trous (15) dans sa partie inférieure, le conteneur étant fermé par un couvercle (17) et a une pale rotative (3) au fond pour mélanger les aliments, le conteneur d'aliments (6) ayant un orifice (12) sur un côté par lequel la vapeur entre et se déplace vers le bas à travers le panier (7) et quand elle est passée à travers les trous (15) du fond, elle remonte à travers le panier (7) pour être expulsée à travers un évidement angulaire (16) situé sur le bord du couvercle (17) et comme le panier (7) possède deux onglets diamétralement opposés (35) qui s'adaptent dans des évidements respectifs (36) sur le bord du conteneur d'aliments (6) le couvercle (17) a des anses correspondantes (37) qui coïncident avec ces évidements (36).

2. Dispositif pour cuisiner, chauffer et/ou décongeler des aliments, ainsi que pour les mélanger, conformément à la revendication 1, **caractérisée en ce que** le panier (7) a une poignée articulée (38).

3. Dispositif pour cuisiner, chauffer et/ou décongeler des aliments, ainsi que pour les mélanger, conformément à la revendication 1, **caractérisée en ce que** il a des contrôles (27-28) indépendants pour différentes vitesses des pales de mélange (3), (29-30) différentes alimentations du générateur de vapeur, et (32-33) pour différents temps de service, et une contrôle (31) pour un arrêt provisoire, le tout affiché sur un écran (34).

4. Dispositif pour cuisiner, chauffer et/ou décongeler des aliments, ainsi que pour les mélanger, conformément à la revendication 3, **caractérisée en ce que** tous les contrôles (27-28-29-30-31-32 et 33) et l'écran (34) sont éclairés quand ils sont en service.

5. Dispositif pour cuisiner, chauffer et/ou décongeler des aliments, ainsi que pour les mélanger, conformément à la revendication 1, **caractérisée en ce que** il a des avertissements visuels et acoustiques de fin de cycle et de manque d'eau pendant le fonctionnement.
